# EUROPÄISCHE PATENTSCHRIFT

(11) **EP 1 518 056 B1**
(45) Veröffentlichungstag und Bekanntmachung des Hinweises auf die Patenterteilung: **18.04.2007**
(21) Anmeldenummer: 03718751.5
(22) Anmeldetag: 12.04.2003
(51) Int. Cl.: F16B 13/12

(54) **SPREIZDÜBEL AUS KUNSTSTOFF**
PLASTIC EXPANDING PLUG
PITON A EXPANSION EN MATIERE PLASTIQUE

(30) Priorität: 02.07.2002 DE 10229577
(43) Veröffentlichungstag der Anmeldung: 30.03.2005
(73) Patentinhaber: fischerwerke Artur Fischer GmbH & Co. KG, 72178 Waldachtal (DE)
(72) Erfinder: NEHL, Wolfgang, 72178 Waldachtal (DE)
(86) Internationale Anmeldenummer: PCT/EP2003/003818
(87) Internationale Veröffentlichungsnummer: WO 2004/005730

(56) Entgegenhaltungen:
- WO-A-82/04106
- DE-A- 2 947 749
- DE-A- 10 015 902
- DE-A- 19 600 931
- DE-A- 19 754 977
- DE-C- 3 317 798

## Beschreibung

Die Erfindung betrifft einen Spreizdübel aus Kunststoff zum Aufspreizen mit einem Spreiznagel oder dgl, mit den Merkmalen des Oberbegriffs des Anspruchs 1.

Derartige Spreizdübel zur Befestigung von Anbauteilen an einem Untergrund, beispielsweise eine Wand oder Decke, sind weithin als sog. Nageldübel bekannt. Beispielhaft sei hier die Druckschrift DE 3 317 798 C2 genannt. Sie weisen eine durchgehenden und sich verjüngende Aufnahmebohrung für einen Spreiznagel auf und umfassen eine Dübelschulter, ein Schaftteil und einen Spreizbereich. Der Spreizbereich wird von mehreren Spreizschenkeln gebildet, die durch einem vom Dübelfuß ausgehenden Schlitz voneinander getrennt sind. Innerhalb der Aufnahmebohrung Kann eine Einschlagsperre in Form einer wulstartigen Durchmesserverengung angeordnet sein. Der Spreizdübel wird dem Benutzer in der Regel mit vormontiertem Spreiznagel bereit gestellt. Dazu wird der Spreiznagel bereits bis zum Anschlag an die Einschlagsperre eingeschoben. Nach der Erstellung eines Bohrlochs im Anbauteil und im Untergrund wird der Dübel in das Bohrloch gesteckt und durch Schläge mit einem Hammer oder dgl. auf den Spreiznagel in das Bohrloch getrieben. Dabei stützt sich zunächst der Spreiznagel an der Einschlagsperre ab, bis die Dübelschulter auf dem Anbauteil aufsitzt. Erst dann wird die Spitze des Spreiznagels in den Spreizbereich vorgetrieben. Durch die Verjüngung der Aufnahmebohrung kommt es zu einem V-förmigen Verspreizen der Spreizschenkel und damit zu einer Verankerung im Untergrund. Benutzt werden häufig Spreiznägel mit einem Sägezahngewinde und Schrauberaufnahme am Kopf (beispielsweise Kreuzschlitz), wodurch ermöglicht wird, dass der Spreiznagel drehend aus dem Dübel entfernt und damit die Befestigung demontiert werden kann.

Bei der Montage eines derartigen Spreizdübels tritt immer wieder das Problem auf, dass die Spreizschenkel vom Schaftteil abbrechen. Der Grund hierfür liegt in der schlagartigen Aufspreizung der Spreizschenkel in dem Moment, wo der Spreiznagel die Einschlagsperre überwindet. Dies wird einerseits durch einen stark konischen Übergang der Aufnahmebohrung vom Schaftteil in das Spreizteil begünstigt. Andererseits kommt es insbesondere bei einem Untergrund aus Hohlkammerbausteinen oder Platten dazu, dass die Spreizschenkel ohne Gegenhalt aufgespreizt werden. Ein weiteres Problem derartiger Spreizdübel liegt in der mangelnden Steifigkeit des Dübels beim Eintreiben in das Bohrloch. Da zunächst nur die Spreizschenkel in das Bohrloch eingesteckt werden, kann der Dübel leicht verbogen werden, wodurch die Gefahr besteht, dass der Dübel bei den ersten Schlägen abknickt.

Der Erfindung liegt die Aufgabe zugrunde, einen Spreizdübel aus Kunststoff zum Aufspreizen mit einem Spreiznagel oder dgl. zu schaffen, der eine gegenüber dem Stand der Technik verbesserte Stabilität und Steifigkeit aufweist.

Diese Aufgabe wird erfindungsgemäß durch die Merkmale des Anspruchs 1 gelöst. Dabei sind die Spreizschenkel entlang des Spreizbereiches durch mehrere radial dehnbare Filmscharniere miteinander verbunden. Die Filmscharniere können entweder eine in das Innere des Spreizdübels hineinragende Faltung aufweisen oder radial abstehend, beispielsweise mit U-förmigen Querschnitt, gestaltet sein. Durch das Einbringen des Spreiznagels werden die Filmscharniere lediglich aufgebogen, also nicht auf Zug beansprucht. Sofern die Spreizung nicht ohnehin durch die Bohrlochwandung begrenzt wird, ist sie dadurch begrenzt, dass die Scharniere ab einer vollständigen Streckung auf Zug belastet werden. Die Scharniere sind so ausgelegt, dass sie bei einem maximal einführbaren Spreiznageldurchmesser knapp gestreckt sind. Damit wird einerseits eine ausreichende Aufspreizung erreicht, ohne dass die Kräfte zum Eintreiben des Spreiznagels wesentlich erhöht werden. Andererseits wird die Aufspreizung durch den Spreizdübel selbst begrenzt, wenn er in Hohlkammerbausteinen oder Platten eingesetzt wird.

Zwar ist die Verbindung von Spreizschenkeln durch Filmscharniere beispielsweise aus der Druckschrift DE 100 15902 A1 bekannt, doch dient dieses Mittel hier der Erhöhung der Torsionssteifigkeit bei einem verknotenden Dübel.

Ein weiteres wichtiges Merkmal liegt in der Schwächung der Wandung im Schaftteil. Hierdurch wird das hülsenartige Schaftteil in seinem Umfang dehnbar. Die Kombination mit einer Verjüngung der Aufnahmebohrung bereits im Schaftteil führt dazu, dass sich auch das Schaftteil im Übergangsbereich zum Spreizbereich etwas aufweiten lässt.

Die Begrenzung der Spreizung durch Filmscharniere kombiniert mit einer Dehnbarkeit des Schaftteils führt dazu, dass die Spreizschenkel am Übergang zum Schaftteil nicht mehr abknicken, sondern es zu einem sanften Übergang kommt. Hierdurch wird ein Abknicken der Spreizschenkel ausgeschlossen. Gleichzeitig wird die Steifigkeit des Spreizbereichs erhöht, wodurch die Gefahr des Abknickens beim Eintreiben des Spreizdübels deutlich verringert wird. Als weiterer Vorteil ergibt sich, dass der Spreizdübel aufgrund der Filmscharniere einen vollständig geschlossen Umfang haben kann, wodurch der Spreiznagel gegen korrosive Medien im Bohrloch geschützt wird. Des Weiteren ergibt sich durch die geschlossene Hülle eine bessere Führung des Spreiznagels. Insbesondere wenn die Bohrungen im Anbauteil und im Untergrund nicht präzise fluchten, kann hierdurch gewährleistet werden, dass der Spreiznagel nicht aus dem Spreizbereich austritt, was sich negativ auf die Verankerung auswirken würde.

In einer weiteren Ausgestaltung der Erfindung können die Filmscharniere mit Durchbrüchen versehen sein, wodurch sie elastischer werden und damit eine weitere Reduzierung der Eintreibkräfte des Spreiznagels erreicht wird.

In einer bevorzugten Ausführung besteht die Einschlagsperre im Schaftteil aus mehreren wendelartig angeordneten Vorsprüngen. Ein Spreiznagel mit einem Sägezahngewinde kann in diese Vorsprünge eingeschraubt werden, wodurch er beim Eintreiben des Dübels auch bei geringer Höhe der Vorsprünge eine große Anlagefläche erhält. Dies sichert einerseits, dass der Dübel auch bei hohen Reibkräften zwischen Dübel und Bohrlochinnenwand bis zur Dübelschulter eingetrieben wird, bevor es zum Verspreizen kommt. Andererseits kann beim Spritzen des Dübels der das Innere formende Kern trotz der sich ergebenden Hinterschneidungen aus der Aufnahmebohrung des Dübels gezogen werden. Dabei hilft wiederum die Dehnbarkeit des Umfangs im Bereich des Schaftteils.

Die Erfindung wird nachfolgend anhand eines in der Zeichnung dargestellten Ausführungsbeispiels näher erläutert. Es zeigen:
- Figur 1: eine perspektivische Darstellung des Spreizdübels mit einem Spreiznagel;
- Figur 2: einen Längsschnitt des Spreizdübels;
- Figur 3: einen Querschnitt des Spreizdübels gemäß der Schnittlinie 1 - I, und
- Figur 4: einen Querschnitt des Spreizdübels gemäß der Schnittlinie II - II.

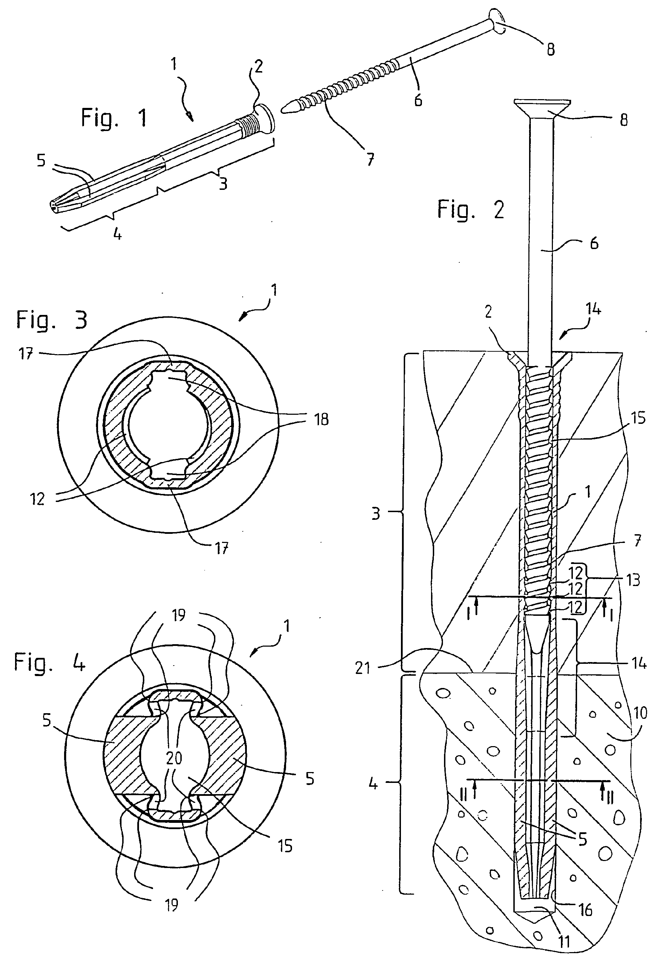

Der in Figur 1 dargestellte Spreizdübel 1 weist eine Dübelschulter 2, ein Schaftteil 3 und einen Spreizbereich 4 mit zwei Spreizschenkeln 5 auf. In den Spreizdübel 1 kann ein Spreiznagel 6 eingebracht werden. Dieser weist ein Sägezahngewinde 7 und am Kopf 8 eine Schrauberaufnahme (beispielsweise Kreuzschlitz, nicht dargestellt) auf.

Figur 2 zeigt den Spreizdübel 1 im Längsschnitt während des Setzens zur Befestigung eines Anbauteils 9 an einem Untergrund 10, in welche zuvor ein Bohrloch 11 eingebracht wurde. Vor dem Setzen wird ein Bohrloch 11 in das Anbauteil 9 und den Untergrund 10 eingebracht. Der Spreizdübel 1 kann dann von Hand etwa bis zur Länge seines Spreizbereiches 4 in das Bohrloch 11 eingeschoben werden. Der Spreiznagel 6 ist dabei bereits vormontiert, d. h. das Sägezahngewinde 7 ist in die wendelartigen Vorsprünge 12 der Einschlagsperre 13 eingedreht. Durch Schläge, beispielsweise mit einem Hammer, auf den Kopf 8 des Spreiznagels 6 wird der eingesteckte Spreizdübel 1 in das Bohrloch getrieben. Dabei stützen sich die Flanken des Sägezahngewindes 7 an den Vorsprüngen 12 der Einschlagsperre 13 ab und übertragen die Schlagkräfte auf den Spreizdübel 1 bis die Dübelschulter 2 die Bohrlochmündung 14 erreicht. Durch das Aufsitzen der Dübelschulter 2 kann der Spreizdübel 1 nicht weiter in das Bohrloch 11 getrieben werden. Bei den folgenden Schlägen auf den Kopf 8 des Spreiznagels 6 steigen die Kräfte an der Einschlagsperre 13 so weit an, dass diese radial verdrängt wird und der Spreiznagel 6 in den Spreizbereich 4 eindringt. Durch die konische Verjüngung 14 der Aufnahmebohrung 15 verengt sich diese, wodurch die Spreizschenkel 5 verspreizt werden und sich an der Bohrlochinnenwand 16 mit großer Flächenpressung anlegen. Die Verjüngung 14 ist so positioniert, dass der Spreizdübel 1 bereits im Übergang vom Schaftteil 3 zum Spreizbereich 4 verspreizt und damit auch in Hohlkammerbausteinen oder Platten eine sichere Verankerung gewährleistet wird.

Figur 3 und 4 zeigen Querschnitte des Spreizdübels 1 ohne den Spreiznagel 6, d. h. in nicht-verspreizter Form. Der in Figur 3 dargestellte Querschnitt aus dem Bereich des Schaftteils 3 weist einen geschlossenen Umfang mit zwei Schwächungen 17 auf. Diese ermöglichen es, dass auch das Schaftteil 3 durch Zugbelastung der Schwächung 17 etwas im Durchmesser dehnbar ist. Dies ist für das Setzen des Spreizdübels 1 von Bedeutung, erleichtert aber auch das Ausziehen des Kerns beim Spritzen, da sich durch die wendelartig angeordneten Vorsprünge 12 der Einschlagsperre 13 (siehe auch Figur 2) Hinterschneidungen ergeben. Auch die durch die Schwächungen 17 entstehenden Ausbuchtungen 18 dienen der Entformung des Kerns, da sich sonst im Spreizbereich 4 (siehe Figur 2) starke Hinterschneidungen ergeben würden.

Ein Querschnitt durch den Spreizbereich 4 zeigt Figur 4. Gegenüber dem Schaftteil (siehe Figur 3) ist der Querschnitt der Aufnahmebohrung 15 verengt. Die beiden Spreizschenkel 5 werden durch die Filmscharniere 19 verbunden. Durch ihren U-förmigen Querschnitt ermöglichen sie ein kraftarmes Aufspreizen der Spreizschenkel 5, da sie lediglich auf Biegung, nicht aber auf Zug belastet werden. Begünstigt wird dieses Verhalten durch die Durchbrüche 20. Durch die im Wesentlichen geschlossene Form des Spreizbereiches 4 ist der Spreizdübel 1 so steif, dass dieser bereits bei geringer Einstecktiefe in das Bohrloch 11 (siehe Figur 2) gegen Verbiegen beim Einschlagen gesichert ist. Darüber hinaus ist das Aufspreizen der Spreizschenkel 5 begrenzt. So sind die Filmscharniere 19 so dimensioniert, dass ein Spreiznagel 6 mit einem maximalen Durchmesser die Spreizschenkel 5 soweit aufspreizt, dass die Filmscharniere 19 nahezu gestreckt sind. Ein weiteres Aufspreizen würde eine Dehnung der Filmscharniere 19 unter Zugbeanspruchung bedingen. Hierzu wären erheblich höhere Kräfte notwendig. Durch das dehnbare Schaftteil 3, durch die im Schaftteil 3 beginnende Verjüngung 14 der Aufnahmebohrung 15 (siehe Figur 2) und durch die begrenzten Spreizbarkeit des Spreizbereiches 4 kommt es auch bei der Verankerung in Hohlkammerbausteinen oder Platten nicht zu einem Abknicken der Spreizschenkel 5 am Übergang zum Schaftteil 3.

## Patentansprüche

1. Spreizdübel aus Kunststoff zum Aufspreizen mit einem Spreiznagel (6) oder dgl. mit einer eine Einschlagsperre (13) aufweisenden, durchgehenden und sich in Einbringrichtung des Spreizdübels (1) verjüngenden Aufnahmebohrung (15) für einen Spreiznagel (6), und mit einer Dübelschulter (2), einem Schaftteil (3) und einem sich hieran anschließenden Spreizbereich (4), der mehrere Spreizschenkel (5) aufweist, **dadurch gekennzeichnet, dass** die Spreizschenkel (5) entlang des Spreizbereiches (4) durch radial dehnbare Filmscharniere (19) miteinander verbunden sind, und dass das Schaftteil (3) über eine Schwächung (17) seiner Wandung einen dehnbaren Umfang aufweist.

2. Spreizdübel aus Kunststoff nach Anspruch 1, **dadurch gekennzeichnet, dass** die Filmscharniere (19) zwischen je zwei Spreizschenkeln (5) senkrecht zur Einbringrichtung des Spreizdübels einen U-förmigen Querschnitt aufweisen.

3. Spreizdübel aus Kunststoff nach Anspruch 1, **dadurch gekennzeichnet, dass** die Filmscharniere (19) Durchbrüche (20) aufweisen.

4. Spreizdübel aus Kunststoff nach Anspruch 1, **dadurch gekennzeichnet, dass** die Einschlagsperre (13) im Schaftteil (3) aus mehreren wendelartig angeordneten Vorsprüngen (12) besteht.

## Claims

1. Expansible fixing plug of plastics material for expansion with an expander nail (6) or the like, having a through-going receiving bore (15) for an expander nail (6), which receiving bore tapers in the direction of introduction of the expansible fixing plug (1) and has a hammering-in stop (13), and having a fixing plug shoulder (2), a shank member (3) and, adjoining the shank member, an expansion zone (4) which has a plurality of expansion limbs (5), **characterized in that** the expansion limbs (5) are joined to one another along the expansion zone (4) by means of radially stretchable film hinges (19), and the shank member (3) has a stretchable periphery over a weakened portion (17) of its wall.

2. Expansible fixing plug of plastics material according to claim 1, **characterized in that** the film hinges (19) between two expansion limbs (5) have a U-shaped cross-section perpendicular to the direction of introduction of the expansible fixing plug.

3. Expansible fixing plug of plastics material according to claim 1, **characterized in that** the film hinges (19) have openings (20) in them.

4. Expansible fixing plug of plastics material according to claim 1, **characterized in that** the hammering-in stop (13) in the shank member (3) consists of a plurality of helically arranged projections (12).

## Revendications

1. Cheville à expansion en plastique destinée à l'écartement avec un clou d'expansion (6) ou semblable dotée d'un alésage de réception (15) destiné à un clou d'expansion (6) présentant un dispositif de blocage d'enfoncement (13), traversant et s'amenuisant dans la direction d'introduction de la cheville d'expansion (1), et dotée d'un épaulement de cheville (2), d'une partie de tige (3) et d'une zone d'écartement (4) se raccordant à celle-ci, qui présente plusieurs côtés latéraux d'écartement(5), **caractérisée en ce que** les côtés latéraux d'écartement (5) sont reliés entre eux le long de la zone d'écartement (4) par des charnières très minces extensibles dans le sens radial (19), et **en ce que** la partie de tige (3) présente une circonférence extensible suite à une réduction (17) de sa paroi.

2. Cheville à expansion en plastique selon la revendication 1, **caractérisée en ce que** les charnières très minces (19) présentent une section transversale en forme de U entre deux côtés latéraux d'écartement (5) verticalement par rapport à la direction d'introduction de la cheville d'expansion.

3. Cheville d'expansion en plastique selon la revendication 1, **caractérisée en ce que** les charnières très minces (19) présentent des ajours (20).

4. Cheville d'expansion en plastique selon la revendication 1, **caractérisée en ce que** le dispositif de blocage d'enfoncement (13) dans la partie de tige (3) est constitué de plusieurs saillies (12) agencées de façon hélicoïdale.
